# EUROPEAN PATENT APPLICATION

(11) **EP 4 640 787 A1**
(43) Date of publication of application: **29.10.2025**
(21) Application number: 23907651.6
(22) Date of filing: 18.12.2023
(51) Int. Cl.: C09K 3/18

(54) **DEICING OR ANTI-ICING COMPOSITION CONTAINING GLYCOL-BASED COMPOUND AND SILANE-BASED COMPOUND, AND DEICING OR ANTI-ICING METHOD USING SAME**

(30) Priority: 21.12.2022 KR 20220180629
(71) Applicant: KD R&D Center Co., Ltd., Busan 49432 (KR)
(72) Inventor: PARK, Jae Yoon, Seoul 06288 (KR); PARK, Hyun Jin, Seongnam-si, Gyeonggi-do 13455 (KR); LEE, Hong Ki, Busan 46765 (KR); PARK, Jin Myeong, Busan 47280 (KR)
(74) Representative: Plougmann Vingtoft a/s
(86) International application number: PCT/KR2023/020863
(87) International publication number: WO 2024/136366

(57) **Abstract**

The present invention relates to a deicing or anti-icing composition containing a glycol-based compound and a silane-based compound, and a deicing or anti-icing method using same. The composition exhibits an excellent effect of delaying the attachment and freezing of snow when applied to the surface of an object made of a metal material, and thus can be effectively used for deicing or anti-icing the surface of a railroad car.

## Description

### Technical Field

The present invention was made with the support of the Ministry of Land, Infrastructure, and Transport of the Republic of Korea, under Sub-project No. 22RTRP-B146023-05 within Project Identification No. 1615012838, which was conducted in the research project named "Development of High-Speed Train De-icing System" in the research program titled "Railway Technology Research Program", by Korea Railroad Corporation, under the management of the Korea Agency for Infrastructure Technology Advancement, from 23 April 2018 to 31 December 2022.

This application claims priority to and the benefit of Korean Patent Application No. 10-2022-0180629 filed in the Korean Intellectual Property Office on 21 December 2022, the disclosure of which is incorporated herein by reference.

The present invention relates to a de-icing or anti-icing composition containing a glycol-based compound and a silane-type compound and a de-icing or anti-icing method using same and, more specifically, to de-icing or anti-icing technology using a propylene glycol (PG)-based composition containing 0.5 to 1.0 wt% of an ethoxy silane-type compound.

### Background Art

During the high-speed travel of high-speed rail vehicles in the winter season, frozen snow and ice accumulating onto the undercarriage and bogie of the high-speed rail vehicles fall at high speed due to vehicle trembling in the ballast section, causing ballast stones to scatter. Such scattered ballast stones persistently cause damage to rail vehicle structures and facilities.

It has also been presented that a major cause of window breakage in rail vehicles during winter is the fall of frozen snow accumulating onto to the undercarriage of the vehicles. The physical damage caused by the fall of frozen snow and ice during winter is mainly the breakage of window glasses in high-speed rail vehicles, followed by the breakage of axle protectors, track components, signal security devices, and traveling gear components. The indirect damages for vehicle driving and maintenance due to such damages are train delays, increased maintenance costs, reduced traveling safety, and the like.

Besides the damages of scattering of ballast stones due to frozen ice accumulating onto the undercarriage of high-speed rail vehicles, train delays and component dysfunctions due to vehicle freezing, such as freezing of doors of rail vehicles, freezing of residual moisture in braking systems, and icing of exposed electrical components of vehicles also persistently occur, and thus, de-/anti-icing-based damage preventing and addressing technologies during the winter are needed.

To solve these problems, the rail operator establishes immediate measures and manages the problems in terms of an operational and maintenance perspective, such as installing ballast scattering prevention nets, operating at reduced speeds, and manually vehicle de-icing, but these measures exhibits poor efficiency.

Currently, the de-icing for rail vehicles (Nuriro, ITX-Saemaeul, ITX-Cheongchun, Mugunghwa, etc.) upon freezing and icing rely on manual labor at train depots, and for high-speed vehicles (e.g., KTX-1, KTX-Sancheon, SR, Honam Line, Wongang Line, etc.), mobile hot-air blowers are used. However, the time taken for de-icing is considerably long, resulting in low energy efficiency, and the temporary need for excessive manual labor is limited to the winter season. There is a need to develop efficient chemical de-/anti-icing technologies to replace the above-described methods.

Previous studies evaluated the ice melting performance of various de-icing fluid materials and selected propylene glycol (PG)-based de-icing fluids suitable for spraying systems. The de-icing fluids are sprayed to melt the already frozen snow and ice, and the larger the frozen area, the longer it takes to melt the ice. Therefore, the pre-spraying of de-icing fluids onto high-speed rail vehicles can minimize the adhesion of snow to further improve de-icing efficiency.

However, even the spraying of de-icing fluids onto high-speed rail trains is ineffective in preventing snow adhesion since most of the fluids are lost from the bogie surface during high-speed traveling, thereby showing poor anti-icing performance. To address the deterioration in anti-icing performance during high-speed traveling, the use of water-repellent agents was considered. Recently, research on anti-icing functional surfaces that utilize super-hydrophobic surfaces to prevent snow accumulation or ice layer formation has been actively conducted.

### Disclosure of Invention

### Technical Problem

The present inventors identified that a composition, which is based on a glycol-based compound as a de-icing fluid and contains a silane-type compound as a water-repellent agent, exhibited excellent de-icing or anti-icing effects compared with existing technologies.

Accordingly, an aspect of the present invention is to provide a de-icing or anti-icing composition containing a glycol-based compound and a silane-type compound.

Another aspect of the present invention is to provide a de-icing or anti-icing method including an application step of applying a de-icing or anti-icing composition containing a glycol-based compound and a silane-type compound onto the surface of a target object.

Still another aspect of the present invention is to provide uses of a composition containing a glycol-based compound and a silane-type compound for de-icing or anti-icing.

### Solution to Problem

The present invention is directed to a de-icing or anti-icing composition containing a glycol-based compound and a silane-type compound and a de-icing or anti-icing method using the same, and the composition according to the present invention exhibits excellent de-icing or anti-icing performance compared with existing de-icing fluids.

The present inventors identified that a de-icing or anti-icing composition, which is based on propylene glycol (PG) and contains fluoro-ethoxysilanes or amino-ethoxysilanes in a content of 0.5 to 1.0 wt%, exhibited excellent effects of delaying snow adhesion and icing.

Hereinafter, the present invention will be described in more detail.

An aspect of the present invention is a de-icing or anti-icing composition containing a glycol-based compound and a silane-type compound.

In the present invention, the composition may contain 50.0 to 90.0 wt% of a glycol-based compound and 0.1 to 2.0 wt% of a silane-type compound relative to the entire composition.

The composition may preferably contain, relative to the entire composition, the glycol-based compound in a content of 50 to 85 wt%, 50 to 80 wt%, 50 to 75 wt%, 50 to 70 wt%, 55 to 90 wt%, 55 to 85 wt%, 55 to 80 wt%, 55 to 75 wt%, 55 to 70 wt%, 60 to 90 wt%, 60 to 85 wt%, 60 to 80 wt%, 60 to 75 wt%, 60 to 70 wt%, 65 to 90 wt%, 65 to 85 wt%, 65 to 80 wt%, or 65 to 75 wt%, for example, 65 to 70 wt%, but is not limited thereto.

The composition may preferably contain, relative to the entire composition, the silane-type compound in a content of 0.1 to 1.8 wt%, 0.1 to 1.5 wt%, 0.1 to 1.2 wt%, 0.1 to 1.0 wt%, 0.2 to 2.0 wt%, 0.2 to 1.8 wt%, 0.2 to 1.5 wt%, 0.2 to 1.2 wt%, 0.2 to 1.0 wt%, 0.5 to 2.0 wt%, 0.5 to 1.8 wt%, 0.5 to 1.5 wt%, or 0.5 to 1.2 wt%, for example, 0.5 to 1.0 wt%, but is not limited thereto.

In the present invention, the glycol-based compound may be propylene glycol, but is not limited thereto.

In the present invention, the silane-type compound may be an ethoxysilane-type compound and, preferably, may be at least one selected from the group consisting of fluoro-ethoxysilanes and amino-ethoxysilanes and, for example, may be fluoro-ethoxysilane, but is not limited thereto.

Another aspect of the present invention is to provide a de-icing or anti-icing method including an application step of applying a de-icing or anti-icing composition containing a glycol-based compound and a silane-type compound onto the surface of a target object.

In the present invention, the composition may contain 50.0 to 90.0 wt% of a glycol-based compound and 0.1 to 2.0 wt% of a silane-type compound relative to the entire composition.

The composition may preferably contain, relative to the entire composition, the glycol-based composition in a content of 50 to 85 wt%, 50 to 80 wt%, 50 to 75 wt%, 50 to 70 wt%, 55 to 90 wt%, 55 to 85 wt%, 55 to 80 wt%, 55 to 75 wt%, 55 to 70 wt%, 60 to 90 wt%, 60 to 85 wt%, 60 to 80 wt%, 60 to 75 wt%, 60 to 70 wt%, 65 to 90 wt%, 65 to 85 wt%, 65 to 80 wt%, or 65 to 75 wt%, for example, 65 to 70 wt%, but is not limited thereto.

The composition may preferably contain, relative to the entire composition, the silane-type compound in a content of 0.1 to 1.8 wt%, 0.1 to 1.5 wt%, 0.1 to 1.2 wt%, 0.1 to 1.0 wt%, 0.2 to 2.0 wt%, 0.2 to 1.8 wt%, 0.2 to 1.5 wt%, 0.2 to 1.2 wt%, 0.2 to 1.0 wt%, 0.5 to 2.0 wt%, 0.5 to 1.8 wt%, 0.5 to 1.5 wt%, or 0.5 to 1.2 wt%, for example, 0.5 to 1.0 wt%, but is not limited thereto.

In the present invention, the glycol-based compound may be propylene glycol, but is not limited thereto.

In the present invention, the silane-type compound may be an ethoxysilane-type compound and, preferably, may be at least one selected from the group consisting of fluoro-ethoxysilanes and amino-ethoxysilanes and, for example, may be fluoro-ethoxysilane, but is not limited thereto.

In the present invention, the target object may be at least one metal material selected from the group consisting of carbon steel, copper, aluminum, tungsten, and iron and, for example, may be carbon steel, but is not limited thereto.

### Advantageous Effects of Invention

The present invention is directed to a de-icing or anti-icing composition containing a glycol-based compound and a silane-type compound, and a de-icing or anti-icing method using same, wherein the composition exhibits an excellent effect of delaying snow adhesion and icing when applied to the surface of a target object, which is a metal material, and therefore, the composition can be effectively used for de-icing or anti-icing the surface of rail vehicles.

### Brief Description of Drawings

FIG. 1 provides images showing de-icing or anti-icing effects measured for de-icing or anti-icing compositions with water-repellent agents added, the compositions being prepared according to an embodiment of the present invention.
FIG. 2 is a graph showing secondary contact angles measured for de-icing or anti-icing compositions with silane-type water-repellent agents added, the compositions being prepared according to an embodiment of the present invention.

### Best Mode for Carrying out the Invention

The present invention is directed to a de-icing or anti-icing composition containing a glycol-based compound and a silane-type compound, and a de-icing or anti-icing method comprising an application step of applying the de-icing or anti-icing composition containing a glycol-based compound and a silane-type compound on the surface of a target object.

### Mode for Carrying out the Invention

Hereinafter, the present invention will be described in more detail by the following exemplary embodiments. However, these exemplary embodiments are used only for illustration, and the scope of the present invention is not limited by these exemplary embodiments.

Throughout the present specification, the "%" used to express the concentration of a specific material, unless otherwise particularly stated, refers to (wt/wt)% for solid/solid, (wt/vol)% for solid/liquid, and (vol/vol)% for liquid/liquid.

### Example 1: Preparation of de-icing or anti-icing composition

For basic research for developing a chemical de/anti-icing fluid capable of both efficient de-icing and anti-icing, a de-icing or anti-icing composition, which was based on propylene glycol (PG) and contained a water-repellent component, was prepared.

A propylene glycol reagent used in the experiment was purchased from Junsei Chemical Co., Ltd. (Japan), and an aqueous solution of 70 wt% of propylene glycol (-67.7°C) was prepared and used. Distilled water having an electrical conductivity of 10 uS/cm or less was used as a solvent. Various products were purchased as water-repellent agent as shown in Table 1 below.

**TABLE 1**

| Water-repellent agent type | |
|---|---|
| Water-repellent agent | Type |
| 6380P | Meta-acrylic Fluorinated polymer |
| NF-01 | Fat-modified Paraffin |
| Q3-9030 (9030) | Fluoro-ethoxysilane |
| OFS-6011 (6011) | Amino-ethoxysilane |

**TABLE 2**

| Sample names and compositions of PG-based de-icing fluids | | | | | | | |
|---|---|---|---|---|---|---|---|
| No. | Composition (wt%) | | | | | | |
| | PG | Water | 6380P | NF-01 | 9030 | 6011 | Total |
| 1 | 70.0 | | 0 | 0 | 0 | 0 | 100 |
| 2 | 69.5 | 30.0 | 0.5 | | | | 100 |
| 3 | 69.0 | 30.0 | 1.0 | | | | 100 |
| 4 | 68.5 | 30.0 | 1.5 | | | | 100 |
| 5 | 68.0 | 30.0 | 2.0 | | | | 100 |
| 6 | 69.5 | 30.0 | | 0.5 | | | 100 |
| 7 | 69.0 | 30.0 | | 1.0 | | | 100 |
| 8 | 68.5 | 30.0 | | 1.5 | | | 100 |
| 9 | 68.0 | 30.0 | | 2.0 | | | 100 |
| 10 | 69.5 | 30.0 | | | 0.5 | | 100 |
| 11 | 69.0 | 30.0 | | | 1.0 | | 100 |
| 12 | 68.5 | 30.0 | | | 1.5 | | 100 |
| 13 | 68.0 | 30.0 | | | 2.0 | | 100 |
| 14 | 69.5 | 30.0 | | | | 0.5 | 100 |
| 15 | 69.0 | 30.0 | | | | 1.0 | 100 |
| 16 | 68.5 | 30.0 | | | | 1.5 | 100 |
| 17 | 68.0 | 30.0 | | | | 2.0 | 100 |

As shown in Table 2 above, water-repellent agents were added at concentrations of 0, 0.5, 1.0, 1.5, and 2.0 wt% to a propylene glycol solution to prepare de-icing or anti-icing compositions, which were then subjected to comparative evaluation for ice melting performance, contact angle, and anti-icing performance.

### Example 2: Kinematic viscosity evaluation

The kinematic viscosity evaluation of the selected test substances is associated with the spray capability provided through the spraying system. For the evaluation of viscosity performance of the prepared de-/anti-icing fluids, tests were conducted according to the international kinematic viscosity standard, ASTM D455-06.

Specifically, a kinematic viscometer tube was washed and dried with acetone, and then a sample was introduced at a predetermined amount. The resultant tube was immersed in an oil bath at the measurement temperature for 20 minutes to ensure an equilibration state between the measurement temperature and the temperature of the test fluid. After 20 minutes, the test fluid was allowed to locate at the starting point by using pressure, and the time taken for the test fluid to move from the start point to the end point was measured to calculate the kinematic viscosity. The test was conducted three times for each test substance, and the average value was calculated and recorded to two decimal places.

**TABLE 3**

| Kinematic viscosity of PG-based de-icing fluids | | | | | | | | |
|---|---|---|---|---|---|---|---|---|
| No. | Composition (wt%) | | | | | | | Kinematic viscosity (cSt, 60°C) |
| | PG | Water | 6380P | NF-01 | 9030 | 6011 | Total | |
| 1 | 70.0 | 30.0 | 0 | 0 | 0 | 0 | 100 | 2.99 |
| 2 | 69.5 | 30.0 | 0.5 | | | | 100 | 2.97 |
| 3 | 69.0 | 30.0 | 1.0 | | | | 100 | 2.93 |
| 4 | 68.5 | 30.0 | 1.5 | | | | 100 | 2.88 |
| 5 | 68.0 | 30.0 | 2.0 | | | | 100 | 2.83 |
| 6 | 69.5 | 30.0 | | 0.5 | | | 100 | 2.95 |
| 7 | 69.0 | 30.0 | | 1.0 | | | 100 | 2.87 |
| 8 | 68.5 | 30.0 | | 1.5 | | | 100 | 2.80 |
| 9 | 68.0 | 30.0 | | 2.0 | | | 100 | 2.72 |
| 10 | 69.5 | 30.0 | | | 0.5 | | 100 | 2.96 |
| 11 | 69.0 | 30.0 | | | 1.0 | | 100 | 2.91 |
| 12 | 68.5 | 30.0 | | | 1.5 | | 100 | 2.87 |
| 13 | 68.0 | 30.0 | | | 2.0 | | 100 | 2.82 |
| 14 | 69.5 | 30.0 | | | | 0.5 | 100 | 2.95 |
| 15 | 69.0 | 30.0 | | | | 1.0 | 100 | 2.90 |
| 16 | 68.5 | 30.0 | | | | 1.5 | 100 | 2.85 |
| 17 | 68.0 | 30.0 | | | | 2.0 | 100 | 2.78 |

As can be confirmed from Table 3, as a result of summarizing viscosity characteristics when four types of water-repellent agents selected for the development of a de-/anti-icing fluid for high-speed rail vehicles were added at up to 2 wt% to the propylene glycol aqueous solution, the kinematic viscosity evaluation values were 2.72 to 2.99 cSt, which are not greatly different from the kinematic viscosity evaluation value of an aqueous solution of 70 wt% of pure propylene glycol.

It was identified that the viscosity characteristics of de-/anti-icing fluids were determined by characteristics of propylene glycol, which is a substrate accounting for 68 to 70 wt%. It was considered through the present search that propylene glycol-based de-/anti-icing fluids containing water-repellent components can be applied to spraying systems.

### Example 3: Ice melting performance evaluation

The ice melting performance (amount of ice melted) of the selected substances was evaluated according to the Environmental Label Certification Standard EL610, Deicer, EM502-3 (2015), as notified by the Ministry of Environment. As for the test method, ice pieces with a uniform thickness of 5 mm were formed in a test container with a diameter of 23.0 cm and a depth of 2.0 cm, and 3.2 ml of a test substance was sprayed thereon. Then, the container was left at a test temperature of -20°C for 30 minutes, and then the volume of melted ice was measured. The test temperature was maintained by using a low-temperature constant-temperature bath. The test was conducted three times for each test substance, and the average value was calculated. The weight of melted ice was measured to four decimal places after the melted ice was collected using a syringe.

**TABLE 4**

| Ice melting performance of PG-based de-icing fluids | | | | | | | | |
|---|---|---|---|---|---|---|---|---|
| No. | Composition (wt%) | | | | | | | Ice melting performance (g) |
| | PG | Water | 6380P | NF-01 | 9030 | 6011 | Total | |
| 1 | 70.0 | 30.0 | 0 | 0 | 0 | 0 | 100 | 10.9478 |
| 2 | 69.5 | 30.0 | 0.5 | | | | 100 | 10.9322 |
| 3 | 69.0 | 30.0 | 1.0 | | | | 100 | 10.9166 |
| 4 | 68.5 | 30.0 | 1.5 | | | | 100 | 10.9005 |
| 5 | 68.0 | 30.0 | 2.0 | | | | 100 | 10.8853 |
| 6 | 69.5 | 30.0 | | 0.5 | | | 100 | 10.9325 |
| 7 | 69.0 | 30.0 | | 1.0 | | | 100 | 10.9164 |
| 8 | 68.5 | 30.0 | | 1.5 | | | 100 | 10.8998 |
| 9 | 68.0 | 30.0 | | 2.0 | | | 100 | 10.8851 |
| 10 | 69.5 | 30.0 | | | 0.5 | | 100 | 10.9318 |
| 11 | 69.0 | 30.0 | | | 1.0 | | 100 | 10.9163 |
| 12 | 68.5 | 30.0 | | | 1.5 | | 100 | 10.9013 |
| 13 | 68.0 | 30.0 | | | 2.0 | | 100 | 10.8861 |
| 14 | 69.5 | 30.0 | | | | 0.5 | 100 | 10.9324 |
| 15 | 69.0 | 30.0 | | | | 1.0 | 100 | 10.9157 |
| 16 | 68.5 | 30.0 | | | | 1.5 | 100 | 10.9002 |
| 17 | 68.0 | 30.0 | | | | 2.0 | 100 | 10.8858 |

For the development of de/anti-icing fluids for high-speed rail vehicles, the ice melting performance, corresponding to the characteristic of a de-icing fluid, was evaluated. The amount of ice to be melted under the same conditions was evaluated according to the type and content of selected water-repellent agents.

As can be confirmed in Table 4, the ice melting performance was dependent on the content of propylene glycol regardless of the type of water-repellent agent, and as the content of the water-repellent agent increases, the content of propylene glycol is decreased, indicating a reduction in ice melting performance.

The propylene glycol-based de-/anti-icing fluids containing water-repellent agents showed almost equivalent ice melting performance, but exhibited effective performance as de-icing fluids, compared with pure propylene glycol aqueous solution containing no water-repellent agent.

### Example 4: Anti-icing performance evaluation

The anti-icing performance of the selected test substances was evaluated by the water spray endurance test (WSET) method, which is used to evaluate the performance of preventing strong snow, severe cold, and icing in the certification standard AS5901 for aircraft fuselage: "Water Spray and High Humidity Endurance Test Method for SAE AMS 1424 SAE AMS 1428 Aircraft Anti-Icing Fluids".

The WSET evaluation could not be conducted domestically, and thus the WSET test method conducted in this study was changed under the conditions where the AS5901 conditions were modified to be adapted to high-speed rail trains. The evaluation conditions are summarized in Table 5.

**TABLE 5**

| WEST evaluation conditions | | | | |
|---|---|---|---|---|
| Evaluation conditions | Bath, Test Plate Temp. | Angle | Water spray intensity | Test time |
| WSET | -10 to -5°C | 80.0±0.2° | 2.0 g/dm²/h | 120 min. |

As for the evaluation method, 5 g of a composition was applied onto a test specimen (steel plate, an undercarriage material of high-speed rail train) with 10 cm (W) × 30 cm (L) under freezing conditions, and then water was continuously sprayed onto the specimen for 2 hours. The sprayed water was allowed to adhere to the specimen, to which the composition was applied, to form ice on the surface under freezing conditions (maintained at -10 to -5°C in a low-temperature environmental chamber) . The anti-icing performance was evaluated by measuring the time taken for ice formation to occur on the specimen.

In this evaluation, the test specimen had an inclination surface at an angle of 80° or more, and thus most of the applied de-/anti-icing fluids flow downward along the inclination surface, and the added water-repellent component would remain on the specimen surface, and thereafter, icing prevention could be expected. In the test, each test substance was evaluated at least three times by measuring the time taken for ice formation on the test specimen and the time taken for ice formation on the entire specimen.

The anti-icing performance was evaluated by comparative evaluation of a test specimen coated with a propylene glycol-based de-/anti-icing fluid containing 1 wt% of a DOW water-repellent agent confirmed to have a high contact angle through the contact angle evaluation of item 3-3, a test specimen coated with a propylene glycol-based de-/anti-icing fluid not containing a water-repellent component, and a test specimen coated without any de-/anti-icing fluid.

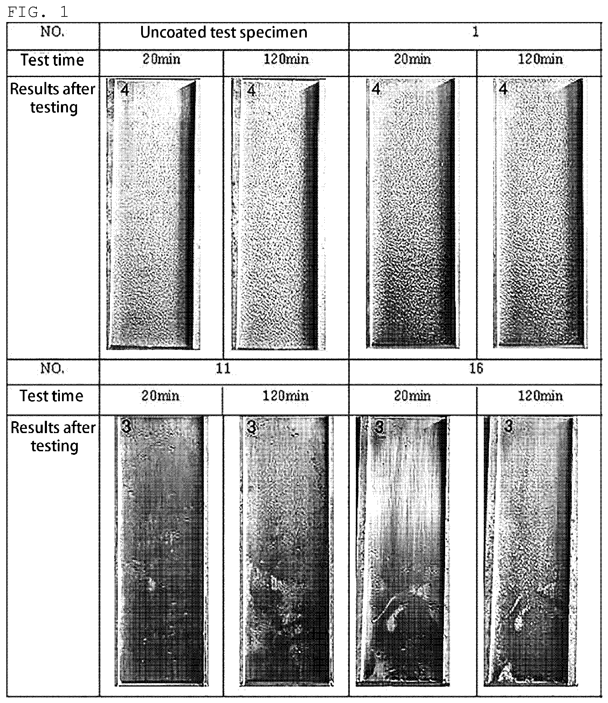

As shown in FIG. 1, the evaluation results identified that the test specimen coated without the de-/anti-icing fluid and the test specimen coated with the de-/anti-icing fluid containing no water-repellent component showed icing formation after 10 minutes, with complete icing observed across the entire specimen after 20 minutes. The test specimen coated with the de-/anti-icing fluid not containing a water-repellent component showed the same results since most of the fluid flowed down along the inclined surface upon application of the de-/anti-icing fluid.

Both two types of propylene glycol-based de-/anti-icing fluids containing 1 wt% of the ethoxy silane water-repellent agent component were observed to show icing formation from 20 minutes, without complete icing observed across the entire specimen even after 2 hours. It was considered that an ethoxysilane type water-repellent component, which rapidly forms a water-repellent layer on the surface of the test specimens as in the contact angle evaluation, prevents snow adhesion and icing.

The target to be finally developed by the present inventors is a de-/anti-icing fluid for high-speed rail vehicles, which has characteristics of both a de-icing fluid and an anti-icing fluid. As for a propylene glycol-based de-/anti-icing fluid containing a water-repellent component, the fluid was pre-sprayed in advance before operation of rail trains to promptly form a water-repellent layer on the bogie surface through the water-repellent component, thereby delaying snow adhesion or icing, thus further improving the de-icing efficiency of ice formation occurring after the operation.

### Example 5: Contact angle evaluation

The contact angle evaluation of the selected test substances was conducted according to item 7.7, water repellency, in KS M 2163 for automotive water-repellent washer fluid, based on the Korean Industrial Standard (KS).

Specifically, a test liquid was applied to a 5 x 5 cm test specimen (steel plate, an undercarriage material of high-speed rails) and left at room temperature for 10 minutes. Then, water was dropped onto the specimen, and the contact angle, resulting from the surface tension of the liquid occurring at the liquid-solid interface, was measured.

Since the de-/anti-icing fluid sprayed on high-speed rail trains is predicted to be almost lost from the bogie surface due to high-speed traveling at 300 km/h, this evaluation was conducted by measuring a primary contact angle according to the above procedure, wiping the surface with a cloth, and then measuring a secondary contact angle. In the test, the contact angle measurement was conducted at any three points per test substance, with the average calculated and recorded to one decimal place

**TABLE 6**

| Contact angles of PG-based de-icing fluids | | | | | | | | | |
|---|---|---|---|---|---|---|---|---|---|
| No. | Composition (wt%) | | | | | | | Contact angle (°) | |
| | PG | Water | 6380P | NF-01 | 9030 | 6011 | Total | 1st | 2nd |
| 1 | 70.0 | 30.0 | 0 | 0 | 0 | 0 | 100 | 15.4 | 25.6 |
| 2 | 69.5 | 30.0 | 0.5 | | | | 100 | 15.4 | 25.4 |
| 3 | 69.0 | 30.0 | 1.0 | | | | 100 | 15.4 | 25.5 |
| 4 | 68.5 | 30.0 | 1.5 | | | | 100 | 15.5 | 25.6 |
| 5 | 68.0 | 30.0 | 2.0 | | | | 100 | 15.5 | 25.6 |
| 6 | 69.5 | 30.0 | | 0.5 | | | 100 | 15.4 | 25.5 |
| 7 | 69.0 | 30.0 | | 1.0 | | | 100 | 15.4 | 25.6 |
| 8 | 68.5 | 30.0 | | 1.5 | | | 100 | 15.4 | 25.6 |
| 9 | 68.0 | 30.0 | | 2.0 | | | 100 | 15.5 | 25.6 |
| 10 | 69.5 | 30.0 | | | 0.5 | | 100 | 15.3 | 96.4 |
| 11 | 69.0 | 30.0 | | | 1.0 | | 100 | 15.4 | 103.1 |
| 12 | 68.5 | 30.0 | | | 1.5 | | 100 | 15.5 | 103.3 |
| 13 | 68.0 | 30.0 | | | 2.0 | | 100 | 15.5 | 103.4 |
| 14 | 69.5 | 30.0 | | | | 0.5 | 100 | 15.4 | 86.7 |
| 15 | 69.0 | 30.0 | | | | 1.0 | 100 | 15.4 | 92.4 |
| 16 | 68.5 | 30.0 | | | | 1.5 | 100 | 15.4 | 92.5 |
| 17 | 68.0 | 30.0 | | | | 2.0 | 100 | 15.5 | 92.5 |

As can be confirmed in Table 6, as a result of evaluating the contact angle of de-/anti-icing fluids obtained by adding, to a propylene glycol aqueous solution, four types of water-repellent agents selected for the development of a de-/anti-icing fluid for high-speed rail vehicles in contents of 0.5, 1, 1.5, and 2.0 wt%, the higher the contact angle, the better the water-repellent performance, and high water repellency was considered to prevent snow adhesion and icing during winter.

The contact angle of the test specimen coated without a de-/anti-icing fluid with respect to water was measured to be 25.6°, and as a result of measuring the primary contact angles according to the contents of four types of de-/anti-icing fluids containing water-repellent components, a contact angle as low as about 15.4°, which was the same as the contact angle of a propylene glycol aqueous solution not containing a water-repellent component, was measured. The reason is considered to be that the hydrophilic propylene glycol aqueous solution, which is a substrate, covers the entire surface of the test specimen, resulting in a low contact angle due to the influence of propylene glycol rather than the effect of the added water-repellent agent.

However, as for high-speed trains, propylene glycol is lost and dissipates due to high-speed traveling, thereby requiring an evaluation under an environment that may be created in actual vehicles, and thus a secondary contact angle was also measured.

As a result of measuring the secondary contact angle, the de-/anti-icing fluids with HEXAFOR 6380P product manufactured by GCC and HYDROSIN NF-01 water-repellent agent added in different contents showed contact angles of about 25.4 to 25.6°, which were similar to a contact angle of a test specimen without a water-repellent agent applied, and OFS-6011 by DOW showed a contact angle of up to 92.5°, while the Q3-9030 water-repellent agent by DOW showed a contact angle as high as up to 103.4°. The two water-repellent agents from GCC, which are not silane-type compounds, may have been easily removed along with the propylene glycol, while failing to form a water-repellent layer on the test specimen surface in a short time, and could have been easily removed along with the propylene glycol.

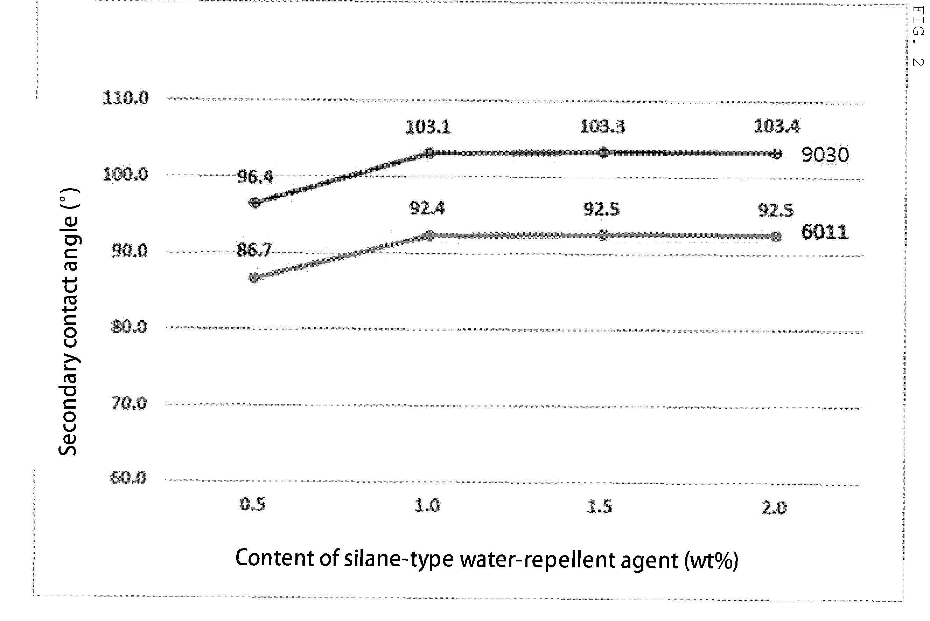

As can be confirmed in FIG. 2, it is considered that the two ethoxysilane-type water-repellent agents by DOW exhibited high water repellency since ethoxysilane molecules within the molecule react with water to adhere to the surface of the test specimen in a short time, forming a water-repellent layer, and the Q3-9030 water-repellent agent containing a fluoro component exhibited a higher contact angle due to the -CF₃ structure, which had low surface energy within the molecule.

In the measurement of the contact angles for different contents of the two water-repellent agents by DOW, the contact angle did not significantly change from a content of 1 wt%. In the evaluation of contact angles of propylene glycol-based de-/anti-icing fluids containing water-repellent components, ethoxysilane-type water-repellent agents were appropriate, and as confirmed in Example 3, the content of the water-repellent agent is most preferably 1 wt% or less since as the content of the water-repellent agent increases, the content of propylene glycol decreases, resulting in a decline in ice melting performance.

### Industrial Applicability

The present invention relates to a de-icing or anti-icing composition containing a glycol-based compound and a silane-type compound and a de-icing or anti-icing method using same and, more specifically, to de-icing or anti-icing technology using a propylene glycol (PG)-based composition containing 0.5 to 1.0 wt% of an ethoxy silane-type compound.

## Claims

1. A de-icing or anti-icing composition comprising a glycol-based compound and a silane-type compound.

2. The de-icing or anti-icing composition of claim 1, wherein the composition contains 50.0 to 90.0 wt% of the glycol-based compound and 0.1 to 2.0 wt% of the silane-type compound relative to the entire composition.

3. The de-icing or anti-icing composition of claim 1, wherein the glycol-based compound is propylene glycol (PG).

4. The de-icing or anti-icing composition of claim 1, wherein the silane-type compound is at least one selected from the group consisting of fluoro-ethoxysilanes and amino-ethoxysilanes.

5. A de-icing or anti-icing method comprising an application step of applying a de-icing or anti-icing composition containing a glycol-based compound and a silane-type compound onto the surface of a target object.

6. The de-icing or anti-icing method of claim 5, wherein the composition contains 50.0 to 90.0 wt% of the glycol-based compound and 0.1 to 2.0 wt% of the silane-type compound relative to the entire composition.

7. The de-icing or anti-icing method of claim 5, wherein the glycol-based compound is propylene glycol (PG).

8. The de-icing or anti-icing method of claim 5, wherein the silane-type compound is at least one selected from the group consisting of fluoro-ethoxysilanes and amino-ethoxysilanes.

9. The de-icing or anti-icing method of claim 5, wherein the target object is at least one metal material selected from the group consisting of carbon steel, copper, aluminum, tungsten, and iron.
